(19) Europäisches Patentamt

European Patent Office

Office européen des brevets

(11) Veröffentlichungsnummer: **0 264 541 B1**

(12) **EUROPÄISCHE PATENTSCHRIFT**

(45) Veröffentlichungstag der Patentschrift:
31.10.90

(51) Int. Cl.⁵: **C04B 28/26, E04C 5/01**

(21) Anmeldenummer: 87108339.0

(22) Anmeldetag: 10.06.87

(54) **Verfahren zur Tiefensanierung von mit Baustahl armierten Bauwerken.**

(30) Priorität: 16.10.86 DE 3635253

(43) Veröffentlichungstag der Anmeldung:
27.04.88 Patentblatt 88/17

(45) Bekanntmachung des Hinweises auf die Patenterteilung:
31.10.90 Patentblatt 90/44

(84) Benannte Vertragsstaaten:
AT BE CH DE ES FR GB IT LI LU NL SE

(56) Entgegenhaltungen:
DE-A- 2 363 794
DE-B- 1 022 373
FR-A- 1 079 484
FR-A- 1 079 484
FR-A- 1 420 343

Seite 411, Band 21, Ullmann s Enzyklopädie der industriellen Technik

(73) Patentinhaber: Jaklin, Hans, Aacher Weg 15 Erlenhof,
D-5500 Trier(DE)

(72) Erfinder: Jaklin, Hans, Aacher Weg 15 Erlenhof,
D-5500 Trier(DE)

(74) Vertreter: Eggert, Hans-Gunther, Dr.,
Räderscheidtstrasse 1, D-5000 Köln 41(DE)

## Beschreibung

In Konstruktionen aus Stahlbeton hat der Beton zwei Funktionen zu erfüllen. Er muß die Druckspannungen aufnehmen und den Stahl vor Korrosion schützen. Der Armierungsstahl hat die Aufgabe, die Schub- und Zugspannung aufzunehmen.

Die Schutzwirkung des Zementsteins für das Eisen und ihre Dauer sind von mehreren Faktoren abhängig. Einerseits sind es die Klima- und Umweltbedingungen und andererseits ist es die Betonqualität, die primär durch die Zementanteile, die Körnung der Betonzuschläge, den Wasserzementfaktor und die Betonverdichtung bestimmt wird.

Die Schutzwirkung des Betons für das Eisen ist durch die hohe Alkalität des durch Hydrolyse entstandenen $Ca(OH)_2$ - pH ca. 13 - bedingt. Die Kohlensäure, die sich aus dem Kohlendioxid der Luft mit Wasser bildet, reagiert mit den Calciumionen der Calciumsilikathydrat- oder Calciumaluminathydratphasen des Zementsteins unter Bildung von Calciumcarbonat. Der Beton carbonatisiert, wie dieser Vorgang allgemein genannt wird, bei einer Betonfeuchte, die sich bei einer relativen Luftfeuchte von unter etwa 60 % einstellt. Sind die Betonporen praktisch vollständig mit Wasser gefüllt, kommt die Carbonatisierung zum Stillstand. Wie schnell und wie tief die Carbonatisierung im Beton vordringt, hängt von der Betonfeuchte und seinem Gefüge ab. Bei vollständiger Carbonatisierung fällt der pH-Wert des Betons auf ca. 8 ab. Die Eisenkorrosion braucht trotzdem nicht einzu setzen, wenn wie in Innenräumen der Beton trocken ist. Betonfeuchten, die sich bei relativen Luftfeuchten von 80 - 100 % einstellen, führen zur Rostbildung am Armierungseisen, sobald der pH-Wert der umgebenden Porenflüssigkeit unter 9,5 fällt. Die Korrosion wird durch Salze (Streu- und Tausalze), die mit dem Wasser eindringen, erheblich verstärkt. Insbesondere kommt es durch Chloridionen zu dem befürchteten Lochfraß am Eisen, der die Tragfähigkeit der Konstruktion herabsetzt. Aber auch die ganzflächige Rostung des Eisens, die anfänglich nur zu einem unbedeutenden Festigkeitsverlust des Bauteils führt, verursacht schon große Folgeschäden. Die Aufnahme von Sauerstoff und Hydratwasser erhöht das Gewicht des Korrosionsprodukts, $Fe_2O_3$ x $H_2O$, bezogen auf den korrodierten Eisenanteil je nach Menge des aufgenommenen Hydratwassers. In Abhängigkeit von der Menge des aufgenommenen Hydratwassers und der eingelagerten Salze können die Korrosionsprodukte des Stahls das vier- bis achtfache des ursprünglichen Volumens einnehmen. Durch die Volumenvermehrung platzen zunächst die Oberflächenschichten ab. Später bilden sich Risse aus, die das ganze Bauwerk durchziehen.

Zur Instandsetzung von auf diese Weise geschädigtem Stahlbeton ist ein ganzes System von Maßnahmen nötig, das auf die Eigenschaften des korrodierten Stahls und des carbonatisierten Betons zugeschnitten sein muß. Eine dauerhafte Sanierung des Bauwerks kann nur erreicht werden, wenn es gelingt

1. die weitere Stahlkorrosion zu unterbinden,

2. erneut einen festen Verbund zwischen dem Stahl und dem Beton herzustellen,

3. die Fehlstellen mit einem am alten Beton und dem Eisen festhaftenden Reparaturmörtel zu füllen und anschließend

4. die gesamte Außenfläche des Bauwerks gegen das Eindringen von Feuchtigkeit abzudichten.

Wenn man die Nebenarbeiten unberücksichtigt läßt, kann der Reparaturprozeß vereinfacht in zwei Phasen eingeteilt werden. Die erste betrifft das Stoppen der Stahlkorrosion und die zweite das Füllen der Löcher und Spalten in der Betonfläche. Die bekannten Reparaturverfahren benötigen acht Stufen, die teilweise sehr arbeitsaufwendig sind: Nachdem der Bewehrungsstahl freigelegt ist, muß der Stahl bis zum Metallglanz sandgestrahlt werden. Als dritte Maßnahme wird auf dem Stahl ein Schutzanstrich aufgebracht, der mit Sand als Haftbrücke für den Reparaturmörtel bestreut wird, bevor der Schutzanstrich getrocknet ist. Im vierten Arbeitsgang werden mit einem Sand-Polymer-Zement-Wasser-Gemisch die Höhlen in der Betonfläche bestrichen, damit die Füllmischung, bestehend aus einem Kunststoff-Zement-Mörtel gut am alten Beton haftet. Die weiteren Maßnahmen betreffen die abschließende Behandlung der Betonoberfläche, Vergleichmäßigung der Betonoberfläche, Grundierung derselben mit einem Anstrich und Auftrag einer Schutzschicht, die die Carbonatisierung der oberen Betonschichten verhindert. (Paint & Resin, Okt. 1984, S. 33-37)

Die vollständige Entrostung durch Sandstrahlen ist allseitig nur möglich, wenn der Baustahl weit genug freigelegt wird, insbesondere muß der Freiraum zwischen der Stahlrückseite und dem Beton groß genug sein, damit die Strahldüse zur Entrostung eingeführt werden kann.

Die DE-OS 35 13 566 beschreibt ein Verfahren zur Hemmung der Korrosion an Stahlmaterial, das in anorganische Bau-Materialien eingebaut ist, bei dem die Oberfläche von eisenbewehrtem Beton oberflächlich nacheinander mit einer wässrigen Lösung eines anorganischen Salzes, welches eine korrosionshemmende Wirkung auf das Stahlmaterial hat, und mit einer wässrigen Lösung eines wasserlöslichen Silikats imprägniert wird. Als korrosionsschutzhemmende Salze werden insbesondere Nitrite eingesetzt. In der Druckschrift wird festgestellt, dass Alkalisilikate allein keinen ausreichenden Korrosionsschutz ergeben.

Weiters ist es gemäß FR-A 1 420 343 bekannt, geschädigter Beton bis hinter die Korrodierung anzubohren und zur Sanierung des Baustahls Zinksalbe oder Phosphate einzupressen.

Die in der Literatur beschriebenen Reparaturmörtel enthalten neben Zement, Sand und Wasser Kunstharzdispersionen. Auf 1 Raumteil (lose Schüttung) Zement werden 0,1 bis 1,0 Raumteile Kunstharzdispersion verwendet. Das sind, bezogen auf Zement, rund 8 bis 48 Gew.% Kunstharzdispersion. Erschwert wird die Verarbeitung von kunstharzvergütetem Zementmörtel, (KVZ-Mörtel) dadurch, daß er innerhalb 30 bis 45 Minuten verarbeitet sein muß, weil es sonst zu Abbindestörungen kommt. Ferner behindern Witterungsverhältnisse bzw. der Feuchtegrad des Betonuntergrundes die Reparaturarbeiten. Bei Temperaturen unter 5 bis 8° C, bei Regen und feuchtkalter Witterung und nassem Untergrund ist eine Verarbeitung dieser Mörtelgruppe ausgeschlossen.

Während Zement hydraulisch erhärtet, also zum Abbinden Wasser benötigt, wird im Gegensatz hierzu der Kunstharzanteil des Mörtels nach der Wasserverdunstung fest. Deshalb muß ein Nachnässen der Repara turschicht unterbleiben, was aber bei niedrigen relativen Luftfeuchten für die Zementkomponente nachteilig ist. Der gegensätzliche chemische und physikalische Charakter von Zement und Kunstharzdispersionen bzw. von erhärtetem Beton und Kunstharz macht die Verwendung von KVZ-Mörtel problematisch, insbesondere je höher der Kunstharzanteil ist.

In feuchten Jahren hat sich noch ein weiterer Nachteil der Mauerverputze mit KVZ-Mörtel gezeigt, die "Vergrünung" der Fassaden durch Algen, kunstharzhaltige Bauteile sind bei ausreichender Feuchte ein guter Nährboden für Parasiten und andere niedrig organisierte Lebensformen.

Die Zweikomponenten-Kunstharzmörtel auf der Basis von Epoxidharzen oder Polyurethan brauchen hier als gattungsfremd nicht behandelt zu werden, obwohl auch sie unter bestimmten Voraussetzungen zum Ausbessern von Betonoberflächen geeignet sind.

Der hohe Aufwand einschließlich der Nebenarbeiten für die Entrostung (weiteres Ausstemmen des Betons und Sandstrahlen) und für die Hertstellung des volldeckenden Schutzanstrichs mit den bekannten Rostschutzfarben sowie die Probleme, die durch die Verwendung alkaliempfindlicher Deckanstriche (Beton pH = ca. 13) entstehen können, zeigen die Notwendigkeit zu einer Vereinfachung und Verbesserung der Verfahren zur Sanierung von Bauwerken aus Stahlbeton.

Mit dem bekannten Arbeitsverfahren und den bekannten Mitteln war es nicht möglich, Stahlbauwerke oder mit Ziegelwerk verblendete Konstruktionen aus Stahl durch und durch zu sanieren.

Die Erfindung hat sich die Aufgabe gestellt, Bauwerke zu sanieren, die aus stahlarmiertem Beton oder aus Stahlkonstruktionen bestehen, die mit Sandstein, Naturstein Betonsteinen oder Ziegelsteinen verblendet sind, d.h. von Bauwerken aus einer Kombination von Stahl und silikatischen Materialien. Hier kommt schadensfördernd zu den geschilderten Problemen von Eisenbetonbauwerken noch die Rißbildung im Verbund von Stein und Fugenmörtel hinzu, die durch das unterschiedliche Verhalten dieser Materialien bei Temperaturschwankungen verursacht sind.

Während beim Stahlbeton nach sachgemäßer Ausführung vorwiegend nur die Oberfläche und die oberflächennahen Schichten Risse aufweisen, verlaufen bei diesem Bauwerkstyp die Risse durch die ganze Mauerstärke bis zur Trägerkonstruktion. Das Regenwasser, in dem immer Sauerstoff gelöst ist, kann praktisch ungehindert bis zum Eisen vordringen. Korrosionsfördernd wirken zusätzlich die Salze, die auf dem Weg von der Außenschicht durch die Mörtel- und Gesteinsrisse vom Regenwasser gelöst und transportiert werden.

Nach dem erfindungsgemäßen Verfahren zur Tiefensanierung von Bauwerken aus einer Kombination von Stahl und silikatischen Materialien bohrt man den geschädigten Beton oder das geschädigte Verblendmauerwerk zunächst bis hinter die korrodierte Armierung bzw. bis zur Stahlkonstruktion an, ohne hierbei die Stahlteile zu verletzen. Dann preßt man die Lösung eines Alkalisilikats mit einem $Me_2O$ ; $SiO_2$-Verhältnis von 1 : 2 bis 1 : 3 ein. Dafür ist je nach den örtlichen Verhältnissen ein Druck von 0,1 $N/mm^2$ bis 7 $N/mm^2$ und maximal 25 $N/mm^2$ erforderlich. Unter ähnlichen Druckbedingungen wird eine Zement-Wasser-Schlämme der vorteilhaft eine kleine Menge der oben bezeichneten Alkalisilikatlösung zugesetzt wird, eingepreßt, bis der Druck im System, ohne daß Material gefördert wird, konstant bleibt. Anstelle der Zementschlämme kann ein Feinsandmörtel verwendet werden, der bezogen auf den Zementanteil, 2 bis 6 Gew.% einer feinteiligen amorphen Kieselsäure mit mindestens 90 Gew.% $SiO_2$ oder feinteilige, gefällte aktive Silikate des Magnesiums, Calciums, Bariums oder Aluminiums enthält, die eine spezifische Oberfläche nach BET von 50 bis 200 $m^2/g$ und einen d $_{50\%}$-Wert unter 20 $\mu$m besitzen. Nachdem die Injektionsstutzen aus den Bohrlöchern entfernt sind, werden die Löcher mit einer Mörtelmischung der oben bezeichneten Art gefüllt und verschlossen. Schließlich wird die äußere Oberfläche der sanierten Bauwerksteile mit der im ersten Verfahrensschritt eingesetzten Alkalisilikatlösung satt getränkt.

In der obigen allgemeinen Formel $Me_2O$ für den Alkalioxidanteil des Alkalisilikats bedeutet Me Lithium, Natrium oder Kalium, wobei letzteres im Gemisch mit Natrium bevorzugt wird. Ein Vol.-Teil des Alkalisilikats wird in der Regel, wenn es zur Oberflächenbehandlung verwendet wird, mit 0,5 bis 2 Volumenteilen Wasser verdünnt. Das entspricht $SiO_2$-Konzentrationen in der Lösung von etwa 7 bis 20 Gewichtsprozent. Die vorstehend und im folgenden verwendete BET-Methode zur Oberflächenbestimmung durch Berechnung der Monoschichtkapazität ist von Brunauer, Emmet und Teller u.a. in Ullmanns Enzyklopädie der technischen Chemie, Band II/1, Seite 758/59 beschrieben.

Zur Kornanalyse wird ein Gerät der Firma Cilas verwendet, das nach der Laserstrahlmethode arbeitet. Diese Methode wird von J. Swithenbank et al. in "Experimental diagnostics in gas phase combustion systems, Progress in Astronautics and Aeronautics, Vol. 53, (1977)" beschrieben.

Von den dem Mörtel zugesetzten feinteiligen Silikaten werden Bariumsilikat der Zusammensetzung 40 % BaO, 52 % $SiO_2$ und 8 % Glühverlust oder ein Natriumaluminiumsilikat der Zusammensetzung 73 % $SiO_2$, 7 % $Al_2O_3$ 7 % $Na_2O$ und 12 % Glühverlust bevorzugt.

Es ist überraschend, daß die Kombination der erfindungsgemäßen Maßnahmen zusammen mit den erfindungsgemäß eingesetzten Mitteln ausreicht, Bauwerke aus Stahlbeton oder Stahlkonstruktionen, die mit Sand-, Beton- oder Ziegelsteinen verblendet sind, auf einfache Weise dauerhaft zu sanieren.

Das vorbeschriebene Verfahren der Tiefensanierung kann auch auf Bauwerke ohne Stahlkonstruktion angewendet werden, die eine zu geringe Festigkeit aufweisen bzw. nicht wasserdicht sind. Durch das erfindungsgemäße Verfahren der Tiefensanierung wird die Druckfestigkeit der behandelten Bauteile erhöht und zwischen diesen ein wasserdichtes Gefüge hergestellt.

Der relativ geringe Anteil von 2 - 6 Gew.% einer feinteiligen amorphen Kieselsäure oder eines Na-Al-Silikats verbessert die Verarbeitungseigenschaften der Zement/Sand/Wassermischung bei praktisch unverändertem Erstarrungs- und Abbindeverhalten.

Es findet keine Phasentrennung durch das Aufschwimmen von Wasser mit Zementfeinanteilen statt, d.h., das sog. Ausbluten des Mörtels oder des Betons wird vollständig unterbunden. Auch ist diese Mörtelmischung bei gleichem Wasser/Zement-Faktor geschmeidiger. Der Mörtel läßt sich daher besser in enge Fugen einpressen und die Oberfläche glatter verstreichen. Der erfindungsgemäß eingesetzte Reparaturmörtel ist auch ohne Nachbehandlung wasserdicht, behält aber seine Durchlässigkeit für Wasserdampf.

Anhand eines Beispiels wird im folgenden das erfindungsgemäße Verfahren näher erläutert.

Beispiel 1

Zur Tiefensanierung werden die Bohrlöher von ca. 6 bis 23 mm Durchmesser so dicht gesetzt, daß das in ein Bohrloch eingepreßte Injektionsmaterial bis zu den benachbarten Bohrlöchern vordringen kann. Das Material für die erste Injektion besteht aus einer modifizierten Alkalisilikatlösung mit der folgenden Zusammensetzung:

| | |
|---|---|
| $SiO_2$ | 19,14% |
| $Na_2O$ | 7,54% |
| $CrO_4^{-2}$ | 0,31% |
| $CO_2$ | 0,7% |
| Ethanol | 0,92% |
| Der Rest zu 100% besteht aus Wasser | |
| Gewichtsverhältnis $SiO_2 : Na_2O = 2{,}54 :1$ | |
| Dichte | 1,251 |
| Viskosität | 10,1 cP |
| Oberflächenspannung | 54 dyn/cm |
| pH-Wert | 11,4 |

Der Injektionsdruck ist von der Güte und dem Ausgangszustand des zu behandelnden Bauwerks abhängig und reicht von 5 bis 70 bar. Das Einpressen dieser Lösung wird bis zur Sättigung des Baukörpers fortgesetzt, was durch die Druckkonstanz im Pumpsystem angezeigt wird.

Das Material für die zweite Injektion besteht aus einer Wasser-Zement-Schlämme, der 2 bis 6 %, bezogen auf den Zementanteil, aktive Kieselsäure bzw. aktives Natriumaluminiumsilikat und/oder eine modifizierte Alkalisilikatlösung der obenstehenden Zusammensetzung zugesetzt wird. Der Wasser/Zementfaktor ist variabel und muß der Porenstruktur des Bauwerks angepaßt werden. Anstelle der Zementschlämme kann ein Feinsandmörtel verwendet werden, insbesondere wenn weite innere Risse und größere Kavernen im Baukörper vorhanden sind. Die restlose Füllung der Hohlräume wird hier ebenfalls durch einen konstantbleibenden Druck von 5 - 70 bar angezeigt.

Die Bohrlöcher werden abschließend mit dem erfindungsgemäßen Mörtel von Hand gefüllt und verschlossen.

**Patentansprüche**

1. Verfahren zur Tiefensanierung von mit Baustahl armierten Bauwerken, wobei man den geschädigten Beton bis hinter die korrodierte Armierung anbohrt, dadurch gekennzeichnet, daß man durch die Bohrung unter Druck die Lösung eines Alkalisilikats mit einem $Me_2O : SiO_2$-Verhältnis von 1 : 2 bis 1 : 3 einpreßt und danach unter Druck eine Zement-Wasser-Schlämme mit Alkalisilikatlösung oder eine Mörtelmischung einpreßt, die 2 bis 6 Gew.%, bezogen auf den Zementanteil, einer feinteiligen amorphen Kieselsäure mit mindestens 90 Gew.% $SiO_2$ oder feinteiliger, gefällter, aktiver Silikate des Magnesiums, Calciums, Bariums oder Aluminiums mit einer BET-Oberfläche von 50 bis 200 m$^2$/g und einem $d_{50}$ %-Wert unter 20 µm enthält.

2. Verfahren nach Anspruch 1, dadurch gekennzeichnet, daß die feinteiligen gefällten Silikate einen $SiO_2$-Gehalt von 56 bis 85 %, bezogen auf die wasserfreie Substanz, aufweisen.

3. Verfahren nach den Ansprüchen 1 und 2, dadurch gekennzeichnet, daß die gefällten feinteiligen aktiven und amorphen Silikate des Aluminiums 5 bis 15 Gew.% $Al_2O_3$ und 1 bis 10 Gew.% $Na_2O$, bezogen auf die wasserfreien Substanzen, enthalten.

4. Verfahren nach den Ansprüchen 1 bis 3, dadurch gekennzeichnet, daß die gesamte Betonoberfläche der sanierten Bauwerksteile, nachdem der Abbindevorgang des Mörtels abgeschlossen ist, mit der Lösung des Alkalisilikats satt getränkt wird.

**Revendications**

1. Procédé de restauration dans la masse d'ouvrages armés avec de l'acier de construction, dans lequel on perce le béton endommagé jusque derrière l'armature corrodée, caractérisé en ce qu'on injecte sous pression à travers le trou de perçage, une solution d'un silicate alcalin présentant un rapport $Me_2O : SiO_2$ de 1:2 à 1:3, puis on injecte sous pression une suspension aqueuse de ciment avec une solution de silicate alcalin ou un mélange de mortier qui contient 2 à 6% en poids, par rapport à la fraction de ciment, d'une silice amorphe en fines particules contenant au moins 90% en poids de $SiO_2$ ou de fines particules précipitées de silicates actifs de magnésium, de calcium, de baryum ou d'aluminium ayant une surface BET de 50 à 200 m2/g et une valeur $d_{50}\%$ inférieure à 20 µm.

2. Procédé suivant la revendication 1, caractérisé en ce que les silicates précipités en fines particules ont une teneur en $SiO_2$ de 56 à 85% par rapport à la substance anhydre.

3. Procédé suivant les revendications 1 et 2, caractérisé en ce que les silicates d'aluminium actifs et amorphes précipités en fines particules contiennent 5 à 15% en poids de $Al_2O_3$ et 1 à 10% en poids de $Na_2O$, par rapport aux substances anhydres.

4. Procédé suivant les revendications 1 à 3, caractérisé en ce que la surface totale du béton des parties restaurées de l'ouvrage, une fois terminé le processus de prise du mortier, est imprégnée jusqu'à saturation de la solution de silicate alcalin.

## Claims

1. Method for the depth reconstruction of buildings reinforced with structural steel, whereby the damaged concrete is bored to behind the corroded reinforcement, characterised in that the solution of an alkali silicate with an $Me_2O : SiO_2$ ratio of 1 : 2 to 1 : 3 is pressed in through the bore under pressure and thereafter a cement/water wash with alkali silicate solution or a mortar mixture, which contains 2 to 6% by weight, relative to the proportion of cement, of a finely divided amorphous silicic acid containing at least 90% by weight $SiO_2$ or finely divided, precipitated, active silicates of magnesium, calcium, barium or aluminium with a BET surface area of 50 to 200 m2/g and a $d_{50}\%$ value of under 20 µm, is pressed in under pressure.

2. Method according to Claim 1, characterised in that the finely divided precipitated silicates have an $SiO_2$ content of 56 to 85%, relative to the anhydrous substance.

3. Method according to Claims 1 and 2, characterised in that the precipitated finely divided active and amorphous silicates of aluminium contain 5 to 15% by weight $Al_2O_3$ and 1 to 10% by weight $Na_2O$, relative to the anhydrous substances.

4. Method according to Claims 1 to 3, characterised in that the entire concrete surface of the reconstructed parts of the building is impregnated to saturation point with the solution of the alkali silicate after the mortar has finished setting.